Europäisches Patentamt

European Patent Office

Office européen des brevets

(19)

(11) Veröffentlichungsnummer : **0 109 958**
**B1**

(12) EUROPÄISCHE PATENTSCHRIFT

(45) Veröffentlichungstag der Patentschrift :
**02.03.88**

(21) Anmeldenummer : **83890193.2**

(22) Anmeldetag : **28.10.83**

(51) Int. Cl.⁴ : **G 01 N 21/64, C 08 J 3/20,
C 09 K 11/02, C 09 K 11/06**

(54) **Messeinrichtung zur Bestimmung des 02-Gehaltes einer Probe.**

(30) Priorität : **22.11.82 AT 4248/82**

(43) Veröffentlichungstag der Anmeldung :
**30.05.84 Patentblatt 84/22**

(45) Bekanntmachung des Hinweises auf die Patenterteilung : **02.03.88 Patentblatt 88/09**

(84) Benannte Vertragsstaaten :
**DE FR GB**

(56) Entgegenhaltungen :
**FR-A- 2 089 572
GB-A- 2 042 578**

(73) Patentinhaber : **AVL AG
Grabenstrasse 11
CH-8201 Schaffhausen (CH)**

(72) Erfinder : **Marsoner, Hermann
Jakominiplatz 17
A-8010 Graz (AT)**
Erfinder : **Kroneis, Herbert
Jakob Gschiel-Gasse 8/21
A-8052 Graz (AT)**

(74) Vertreter : **Krause, Walter, Dr. Dipl.-Ing.
Postfach 200 Singerstrasse 8
A-1014 Wien (AT)**

EP 0 109 958 B1

## Beschreibung

Die Erfindung betrifft eine Meßeinrichtung zur Bestimmung des $O_2$-Gehaltes einer Probe, mit einem $O_2$-abhängig fluoreszierenden Indikator, der in einem Polymerträger eingebettet und mit dem die Probe zumindest teilweise in Kontakt bringbar ist, und einer Anordnung zur Messung des vom Indikator nach Anregung abgegebenen Fluoreszenzlichtes.

Es ist bekannt, daß molekularer Sauerstoff die Fluoreszenzintensität von einer großen Reihe von organischen Substanzen, zum Beispiel der polyzyklischen aromatischen Kohlenwasserstoffe beeinflußt. Dabei tritt der molekulare Sauerstoff mit dem durch das Anregungslicht angeregten Molekül in Wechselwirkung, nimmt dabei dem im angeregten Zustand befindlichen Molekül Energie ab und reduziert die Intensität des ausgesandten Fluoreszenzlichtes. Es ist weiters bekannt, über den Umweg der Fluoreszenzintensität eines derartigen Indikatorstoffs den Partialdruck des molekularen Sauerstoffes zu messen. Dabei kann z. B. der fluoreszierende Stoff in einem Lösungsmittel gelöst sein. Der Partialdruck des in diesem Lösungsmittel enthaltenen Sauerstoffs bestimmt die Höhe der Fluoreszenzintensität.

Bei einer beispielsweise aus der DE-PS 25 08 637 bekannten Einrichtung ist eine dünne Schichte der Indikatorlösung auf einem geeigneten Trägermaterial, das lichtdurchlässig ist, und eine Abdeckung der Lösung des fluoreszierenden Stoffs durch eine für Sauerstoff permeable Membran vorgesehen. An der Trägerseite dieser Anordnung ist eine Beleuchtungs- und Lichtmeßeinrichtung angeordnet. Durch die dünne, für Sauerstoff permeable Membran, ist ein rascher Ausgleich des Sausrstoffpartialdrucks zwischen der fluoreszierenden Schichte und dem angrenzenden Medium außerhalb der Deckmembran möglich. Die fluoreszierende Schichte nimmt dabei durch Diffusion jeweils sehr rasch den Sauerstoffpartialdruck des angrenzenden Mediums an und stellt die Intensität seines Fluoreszenzlichtes darnach ein. Mit einer derartigen Anordnung ist die Messung von Sauerstoffpartialdrücken auch in wäßrigen Medien mit Hilfe optischer Mittel möglich.

Diese Schrift offenbart auch den Gedanken, den Indikatorstoff, also die fluoreszierende Substanz, in eine polymere Folie « leckfrei » einzusiegeln. Es wird jedoch kein Verfahren zur Herstellung von Sensorelementen auf der Basis von Polymerfolien angegeben.

Bevor nun auf die weitere Problematik des Einbaus von Indikatormolekülen in Polymere eingegangen wird, sollen die wesentlichen aromatischen Kohlenwasserstoffverbindungen genannt werden, die als Indikatoren bei einer Einrichtung nach der Erfindung in Frage kommen. Von diesen wären vorzugsweise folgende Verbindungen zu nennen :

Carbazol, Acridon, Fluoranthen, 9,10 Diphenylanthracen, Chrysen, Benz(a)anthracen, Tetracen, Pyren, Dibenz(ah)anthracen, Perylen, Benzo(ghi)perylen, Coronen, Anthanthren, Decacyclen, 1 Aminoanthracen, 2 Aminoanthracen, 1 Aminopyren.

Über diese Verbindung hinaus zeigen sehr viele weitere fluoreszierende Substanzen aus der Gruppe der polyzyklischen, homozyklischen oder heterozyklischen aromatischen Kohlenwasserstoffe Fluoreszenz und/bzw. Fluoreszenzlöschung durch molekularen Sauerstoff.

Um nun eine derartige Indikatorsubstanz in ein Polymer einzubringen kann man sich mehrerer bekannter Methoden bedienen :

1. Man wählt Indikatorsubstanzen, die in einem Lösungsmittel für das gewählte Polymer selbst löslich sind und bereitet eine gemeinsame Lösung des Indikatorstoffs und des Polymers, woraus durch Verdampfen des gemeinsamen Lösungsmittels der den Indikatorstoff enthaltende Polymer zurückbleibt.

2. Abgesehen von einem gemeinsamen Lösungsmittel kann auch ein Suspensionsmittel für ein Polymer verwendet werden, wenn dieses wiederun als Lösungsmittel für den Indikatorstoff geeignet ist.

3. Wenn die Polymerisation des verwendeten Polymers aus einem Reaktionsgemisch mehrerer Komponenten heraus erfolgt kann eine dieser Komponenten gleichzeitig als Lösungsmittel für den Indikatorstoff herangezogen werden.

Nach dieser einfachen und an sich bekannten Vorgangsweise ergeben sich eine Reihe von Problemen, die dazu führen, daß in Polymere derart eingebaute Indikatormoleküle für den erfindungsgemäßen Zweck nicht geeignet sind. Dies z. B. dadurch, daß durch das Verdampfen des gemeinsamen Lösungsmittels keine molekulare Verteilung des Indikatorstoffs im Polymer entsteht, sondern daß der Indikatorstoff im Polymer auskristallisiert. Der in kristallisierter Form im Polymer vorliegende Indikatorstoff zeigt zwar durchaus Fluoreszenz, jedoch wird diese durch den anwesenden molekularen Sauerstoff nicht oder höchstens in äußerst geringem, praktisch unbrauchbarem Ausmaß beeinflußt.

Außer einer feinen Verteilung von Mikrokristallen im Polymer wurde die Bildung von größeren Aggregaten von kristallinem Indikator im Polymer beobachtet.

Selbst wenn in gewissen Fällen molekulare Verteilung des Indikators im Polymer vorliegt, wie dies beispielsweise mit PVC-Lösungen durchaus erreicht werden kann, zeigt sich, daß die derart eingebauten Indikatoren keine Fluoreszenzlöschung durch molekularen Sauerstoff zeigen.

Aufgabe der vorliegenden Erfindung ist es, eine Meßeinrichtung der eingangs genannten Art so auszubilden, daß die genannten Nachteile der bekannten Einrichtungen nicht auftreten und daß insbesonders eine meßtechnische auswertbare ausreichend große Fluoreszenzlöschung auftritt.

Dies wird gemäß der Erfindung erreicht durch die Verwendung von Weichmacher-kompatiblen, insbesonders linearen, amorphen Polymeren als Trägermaterial für den Indikator, welche neben den eingebetteten Indikatormolekülen noch zusätzlich Weichmacher enthalten. Ausreichende Fluoreszenzlöschung der im Polymer enthaltenen Indikatormoleküle tritt also auf, wenn das Gemisch aus Polymer und Indikator noch weitere zusätzliche Komponenten enthält, nämlich sogenannte Weichmacher. Dies sind Verbindungen, die einem Polymer zugesetzt werden, um die Sprödigkeit zu reduzieren oder die Flexibilität zu erhöhen. Sie wirken wie das Polymer durchdringende Lösungsmittel, welche die intermolekulare Cohäsion verringern.

Für die Verwendbarkeit eines Polymers, beispielsweise in Form einer Polymermembran, im Sinne der Erfindung ist ausreichend hohe Sauerstoffpermeabilität des Membranmaterials als wesentliche Voraussetzung anzusehen. Die Sauerstoff-Empfindlichkeit wird bestimmt durch die Fluoreszenzabklingzeit des verwendeten Indikators und den Sauerstoffpermeabilitätskoeffizienten ($P_{O2}$) des Polymermaterials. Unter Fluoreszenzabklingzeit versteht man die mittlere Lebenszeit des angeregten Zustandes eines fluoreszierenden Moleküls.

Mit Ausnahme von Silicon ($P_{O2} \cong 600.10^{-10}cm^2 \; s^{-1}cmHg^{-1}$ ; 1 cmHg = 1.33 kPa) sind die Sauerstoffpermeabilitätskoeffizienten von weichmacherfreien Polymeren zu klein ($P_{O2} < 35.10^{-10}cm^2 s^{-1}cmHg^{-1}$) um meßtechnisch brauchbare Sauerstoffempfindlichkeit selbst bei Verwendung von Indikatoren mit hohen Fluoreszenzabklingzeiten zu erhalten.

Im allgemeinen werden folgende Anforderungen an für die Zwecke der Erfindung verwendbare Weichmacher gestellt.

1. Compatibilität mit dem Polymer

2. Effektivität in der Wirkung

3. permanenter Verbleib im Polymer ohne zeitliche Veränderung der Eigenschaften

- die Weichmachersubstanzen sollten also nicht flüchtig und durch Flüssigkeiten nicht extrahierbar sein, mit welchen das Polymer in Kontakt kommt.

Dengemäß ist in Weiterbildung der Erfindung vorgesehen, daß hydrophile Polymere aus der Gruppe : Celluloseacetat, Celluloseacetatbutyrat, Cellulosenitrat oder Ethylcellulose, als Trägermaterial und Weichmacher aus der Gruppe : Glykol, Glyzerin oder Pentaverythrit, verwendet sind, bzw. daß hydrophobe Polymere aus der Gruppe : Polyvinylchlorid, Polystyrol, Polyvinylacetat, Polyvinylbutyral, Polyvinylchloridacetat, Polyäthylen, Polypropylen, Polyurethan, Polyester, Naturkautschuk, Isopren-Kautschuk, Chloropren-Kautschuk od. Butylkautschuk, als Trägermaterial und Weichmacher aus der Gruppe : hochsiedende Ester — wie Triarylphosphate, Dialkylphtalate, Dialkyladipate od. Dialkylsebazate —, mineralische Öle, chlorierte Bi- oder Polyphenyle, epoxidierte Öle, Polymere Weichmacher — wie Polyester, Polyisobuten oder Nitrid-Kautschuk —, oder polymerisierbare Weichmacher — wie Alkyl-, Aryl-, Nitridester, verwendet sind.

Daneben führt auch eine sogenannte « Innere Weichmachung » zu erhöhten Permeabilitäten. Unter « Innerer Weichmachung » versteht man eine chemische Modifizierung des Polymers oder Copolymerisation mit Anteilen anderer Monomere.

Es zeigt sich, daß die $O_2$-Permeabilität in allen Fällen durch Weichmacherzusatz zum Polymer erhöht wird ; — in welchem Maß hängt aber von Art und Menge des Weichmachers ab. Höhere Weichmacheranteile führen erwartungsgemäß zu höheren Permeabilitäten. Welche Art von Weichmachern vorteilhafterweise verwendbar sind, hängt von der Viskosität der Weichmacher ab. Weichmachersubstanzen mit kleinerer Viskosität führen zu höheren Permeabilitäten.

In weiterer Ausbildung der Erfindung ist vorgesehen, daß polyzyklische, homo- oder heterozyklische aromatische Moleküle, vorzugsweise polyzyklische aromatische Kohlenwasserstoffe mit Fluoreszenzabklingzeiten $\tau_0$ größer als 5 ns als Indikator verwendet sind, was besonders gute Ergebnisse im Hinblick auf die Signalausbeute ergibt.

Wie auch elektrochemische Sensoren für die Messung von Gasen, müssen optische Sensoren mit Eichmedien bekannter Gaskonzentration geeicht werden. Wenn nun die Aufgabe besteht, den Sauerstoffpartialdruck in Flüssigkeiten zu messen und weiters nicht davon ausgegangen werden kann, daß das Eichmedium gleiche optische Eigenschaften besitzt wie die Probe, so sind an der Grenzfläche zwischen Membran und Probe optische Effekte zu erwarten, die das gemessene Fluoreszenzsignal in störender Weise beeinflussen. Dies geschieht vor allem dadurch, daß die Reflexionsbedingungen an der Grenzfläche zwischen Membran und Probe jeweils von den optischen Eigenschaften des Probenmediums abhängen und damit die Rückreflexion des Anregungs- und Fluoreszenzlichtes in die Sensormembran von den optischen Eigenschaften des Probenmediums abhängt. Um diesen unerwünschten Nebeneffekt zu vermeiden, ist es erforderlich, der Grenzfläche zwischen Membran und Probenmediums definierte optische Eigenschaften zu verleihen.

Es ist beispielsweise durch die DE-PS 2 508 637 bekannt, daß die Oberfläche eines derartigen optischen Sensors durch Verspiegelung oder Schwärzung in der Weise präpariert werden kann, daß der Einfluß der optischen Eigenschaften des Probenmediums unerheblich ist.

Bei den erfindungsgemäßen Meßeinrichtungen mit erhöhter Indikatorkonzentration erweist sich dies als nachteilig, da eine entsprechend dünne Schwärzungs- oder Versiegelungsschichte leicht von der Oberfläche des Sensors entfernt werden kann aber zu ihrer mechanischen Stabilisierung keine erhebliche Dicke aufweisen darf, da dadurch die Diffusion von Sauerstoff aus den Probenbereich in den Indikatorinnenraum erschwert wird.

Aus diesem Grund hat es sich in Zusammenhang mit der vorliegenden Erfindung als vorteilhaft erwiesen, gemäß einer weiteren Ausgestaltung an der der Probe zugewandten Seite des Polymerträgers eine zusätzliche Polymerschicht, mit geringer Lichtdurchlässigkeit, beispielsweise Silicon mit eingelagerten Eisenoxid-Partikeln, aufzubringen.

Eine weitere Möglichkeit zur Herstellung der optischen Unabhängigkeit vom Probenmedium ist durch Einlagerung von Pigmenten, wie beispielsweise Eisenoxidpartikeln in die indikatorhältige Polymermembran gegeben. Vorteilhafterweise können diese Partikeln durch Einwirkung äußerer Kraftfelder während des Aushärtevorganges der Membran in einen oberflächennahen Bereich der Indikatormembran dirigiert werden (Beispiele für Kraftfelder : Gravitationsfeld, elektrisches Feld, Magnetfeld).

Eine weitere Möglichkeit zur Herstellung der optischen Unabhängigkeit Vom Probenmedium ist gemäß der Erfindung dadurch gegeben, daß an der der Probe zugewandten Seite des Polymerträgers ein dünnes Maschengitter, insbesonders aus Metall oder Kunststoff, miteinpolymerisiert ist. Als Materialien haben sich dafür z. B. Siebdrucknetze als geeignet erwiesen.

Obwohl allein das Auflösen von Indikatorsubstanz im polymeren Trägermaterial häufig ausreicht, um Indikatorverluste an die Umgebung zu verhindern, kann es für verschiedene Anwendungszwecke von Vorteil sein, andere Methoden zur Immobilisierung des Indikators im Polymerträger anzuwenden.

Diese sind zum Beispiel :

a) Einschränkung der Indikatorbeweglichkeit im Polymer durch chemische Modifizierung (Alkylierung mit längeren C-Ketten) der Indikatoren

b) Kovalente Bindung der Indikatoren an die Polymersubstanz.

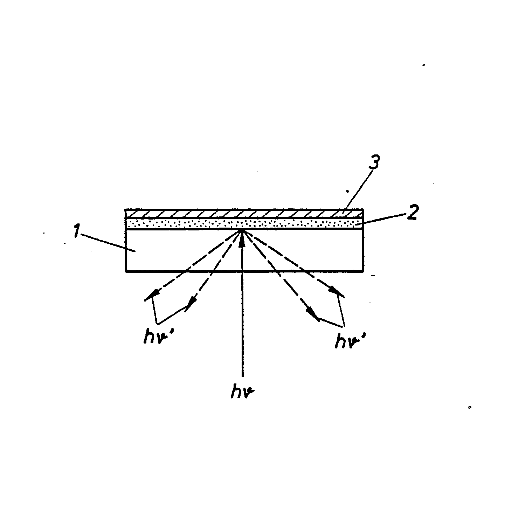

Durch die geschilderten Maßnahmen ist ein in Schichten aufgebauter Sensor gegeben, wie dies die Abbildung zeigt. Die unterste Schichte 1, die einer hier nicht dargestellten Beleuchtungs- und Lichtmeßeinrichtung zugewandt ist und vom Anregungslicht (hν) durchstrahlt wird, dient als fester Träger (beispielsweise Glas). Die mittlere Schichte 2 ist jene Polymerschichte, die in molekularer Verteilung die fluoreszierende Indikatorsubstanz derart enthält, daß ein vom Sauerstoffgehalt des an den Sensor angrenzenden Probenmaterials abhängiges Fluoreszenzsignal (hν') meßbar ist. Über die Schichte 2 liegt die dem Probenmaterial zugewandte optische Isolationsschichte 3. Die Schichten 2 und 3 bestehen aus einem für Sauerstoff gut durchlässigen Polymermaterial. Die beiden genannten Schichten sind durch Polymerisation homogen miteinander verbunden.

Auf die Trägerschicht 1 könnte unter Umständen verzichtet werden, wenn entweder keine mechanische Stabilität erforderlich ist, oder die verbleibenden beiden Schichten in einem geeigneten Halter aufgespannt werden. Die Beleuchtungs- und Lichtmeßeinrichtung befindet sich dabei unmittelbar an die Schichte 2 angrenzend.

Beispiele

a) in 10 ml Tetrahydrofuran werden in der angegebenen Reihenfolge 1,5 mg Pyren, 0,3 g Polyvinylchlorid und 0,7 g Dinonylphthalat gelöst.

Auf ein Trägerplättchen aus Acrylglas werden pro cm² 30 μl dieser Lösung aufgebracht und mit einem schwarzen Siebdrucknetz (Fadendurchmesser 30 μm, offene Fläche 46 Prozent) abgedeckt.

Nach Verdampfung des Lösungsmittels Tetrahydrofuran ist das Sensorelement einsatzbereit.

b) in 10 ml Tetrahydrofuran werden in der angegebenen Reihenfolge 1,5 mg Pyren, 0,3 g Polyvinylchlorid und 0,7 g Dinonylphthalat gelöst, sowie 5 mg Eisenoxidpartikeln suspendiert.

Auf ein Trägerplättchen aus Acrylglas werden pro cm² 30 μl dieser Suspension aufgebracht. Während der Verdampfung des Lösungsmittels befindet sich das Trägerplättchen im Feld eines Dauermagneten, welcher die Eisenoxidpartikeln an die dem Trägerplättchen abgekehrte Oberfläche der Polymerschicht dirigiert.

Nach Verdampfung des Lösungsmittels Tetrahydrofuran ist das Sensorelement einsatzbereit.

**Patentansprüche**

1. Meßeinrichtung zur Bestimmung des $O_2$-Gehaltes einer Probe, mit einem $O_2$-abhängig fluoreszierenden Indikator, der in einem Polymerträger eingebettet und mit dem die Probe zumindest teilweise in Kontakt bringbar ist, und einer Anordnung zur Messung des vom Indikator nach Anregung abgegebenen Fluoreszenzlichtes, gekennzeichnet durch die Verwendung von Weichmacher-kompatiblen, insbesonders linearen, amorphen Polymeren als Trägermaterial für den Indikator, welche neben den eingebetteten Indikatormolekülen noch zusätzlich Weichmacher enthalten.

2. Meßeinrichtung nach Anspruch 1, dadurch gekennzeichnet, daß hydrophile Polymere aus der Gruppe : Celluloseacetat, Celluloseacetatbutyrat, Cellulosenitrat oder Ethylcellulose, als Trägermaterial und Weichmacher aus der Gruppe : Glykol, Glyzerin oder Pentaverythrit, verwendet sind.

3. Meßeinrichtung nach Anspruch 1, dadurch gekennzeichnet, daß hydrophobe Polymere aus der Gruppe : Polyvinylchlorid, Polystyrol, Polyvinylacetat, Polyvinylbutyral, Polyvinylchloridacetat, Polyäthylen, Polypropylen, Polyurethan, Polyester, Naturkautschuk, Isopren-Kautschuk, Chloropren-Kautschuk od. Butylkautschuk, als Trägermaterial und Weichmacher aus der Gruppe : hochsiedende Ester — wie Triarylphosphate, Dialkylphthalate, Dialkyladipate od. Dialkylsebazate —, mineralische Öle, chlorierte Bi- oder Polyphenyle, epoxidierte Öle, Polymere Weichmacher — wie Polyester, Polyisobuten oder Nitrid-Kautschuk —, oder polymerisierbare Weichmacher — wie Alkyl-, Aryl-, Nitridester, verwendet sind.

4. Meßeinrichtung nach einem der Ansprüche 1 bis 3, dadurch gekennzeichnet, daß polyzykli-

sche, homo- oder heterozyklische aromatische Moleküle, vorzugsweise polyzyklische aromatische Kohlenwasserstoffe mit Fluoreszenzabklingzeiten $\tau_0$ größer als 5 ns, als Indikator verwendet sind.

5. Meßeinrichtung nach einem der Ansprüche 1 bis 4, dadurch gekennzeichnet, daß an der der Probe zugekehrten Seite des Polymerträgers eine zusätzliche Polymerschicht mit geringer Lichtdurchlässigkeit aufgebracht ist, beispielsweise eine Polymerschicht der gleichen Zusammensetzung wie das Trägermaterial mit eingelagerten Eisenoxid-Partikeln.

6. Meßeinrichtung nach einem der Ansprüche 1 bis 4, dadurch gekennzeichnet, daß im indikatorhältigen Polymerträger zusätzlich Pigmentpartikeln eingelagert sind, beispielsweise Eisenoxidpartikeln.

7. Meßeinrichtung nach Anspruch 6, dadurch gekennzeichnet, daß die Pigmentpartikeln, durch Einwirkung äußerer Kraftfelder — wie beispielsweise Gravitationsfeld, elektrisches Feld oder Magnetfeld — während des Aushärtungsprozesses, an der der Probe zugekehrten Seite des Polymerträgers angereichert vorliegen.

8. Meßeinrichtung nach einem der Ansprüche 1 bis 4, dadurch gekennzeichnet, daß an der der Probe zugekehrten Seite des Polymerträgers ein dünnes Maschengitter, insbesonders aus Metall oder Kunststoff, miteinpolymerisiert ist.

9. Meßeinrichtung nach einem der Ansprüche 1 bis 8, dadurch gekennzeichnet, daß die Indikatorsubstanz zur Immobilisierung in chemisch modifizierter Form vorliegt, vorzugsweise mit längeren verzweigten oder unverzweigten Kohlenwasserstoffketten von $C_3$ bis $C_{20}$ alkyliert, wodurch die Indikatorbeweglichkeit im Polymermaterial eingeschränkt ist.

10. Meßeinrichtung nach einem der Ansprüche 1 bis 8, dadurch gekennzeichnet, daß die Indikatorsubstanz zur Immobilisierung kovalent an das polymere Trägermaterial gebunden vorliegt.

## Claims

1. A measuring device for determining the $O_2$ content of a sample comprising an indicator substance fluorescing with the amount of $O_2$ acting upon it, which is embedded in a polymer carrier and with which the sample may be brought into contact at least partially, and a setup for measuring the fluorescent light given off by the indicator substance upon excitation, wherein plasticizer-compatible, mostly linear and amorphous polymers are used as carrier materials for said indicator substance, which contain plasticizers in addition to the embedded indicator molecules.

2. A measuring device according to claim 1, wherein hydrophilic polymers from the group of cellulose acetate, cellulose acetate butyrate, cellulose nitrate or ethyl cellulose are used as carrier materials, and wherein plasticizers are taken from the group of glycol, glycerin or pentaerythrite.

3. A measuring device according to claim 1, wherein hydrophobic polymers from the group of polyvinylchloride, polystyrene, polyvinylacetate, polyvinyl butyral, polyvinyl chloride acetate, polyethylene, polypropylene, polyurethane, polyester, natural rubber, isoprene rubber, chloroprene rubber or butyl rubber are used as carrier materials, and wherein plasticizers are taken from the group of high-boiling esters — such as triarylphosphates, dialkylphthalates, dialkyladipates, dialkylsebacates —, mineral oils, chlorinated biphenyls or polyphenyls, epoxidised oils, polymeric plasticizers — such as polyester, polyisobutene, nitride rubber —, or polymerizable plasticizers — such as alkyl ester, aryl ester, nitride ester.

4. A measuring device according to any of claims 1 to 3, wherein polycyclic, homocyclic or heterocyclic aromatic molecules preferably polycyclic aromatic hydrocarbons with fluorescence decay times $\tau_0$ greater than 5 ns, are used as indicator substances.

5. A measuring device according to any of claims 1 to 4, wherein an additional layer of polymer of low transparency is applied on the side of the polymer carrier facing the sample, e. g., a polymer layer of the same composition as the carrier material incorporating particles of ferrous oxide.

6. A measuring device according to any of claims 1 to 4, wherein the said polymer carrier containing the indicator substance is additionally provided with pigment particles, such as particles of ferrous oxide.

7. A measuring device according to claim 6, wherein the said pigment particles will be accumulated on the side of the polymer carrier facing the sample due to the influence of external fields of force, such as gravitational, electric or magnetic fields.

8. A measuring device according to any of claims 1 to 4, wherein a thin mesh screen, preferably of metal or plastic, is incorporated during polymerisation on the side of the polymer carrier facing the sample.

9. A measuring device according to any of claims 1 to 8, wherein for the purpose of immobilization the indicator substance is supplied in a chemically modified form, preferably alkylated with longer hydrocarbon chains, branched or unbranched (from $C_3$ to $C_{20}$), such that the indicator mobility in the polymer material is reduced.

10. A measuring device according to any of claims 1 to 8, wherein for the purpose of immobilization there is a covalent bond between the indicator substance and the polymer carrier material.

## Revendications

1. Installation de mesure pour la détermination de la teneur en $O_2$ d'un échantillon, au moyen d'un indicateur fluorescent en dépendance de $O_2$,

qui est incorporé dans un polymère porteur et avec lequel l'échantillon peut être amené, au moins partiellement, en contact et comportant un dispositif pour la mesure de la lumière fluorescente émise, après excitation par l'indicateur ; installation caractérisée par l'emploi, comme éléments-porteurs de l'indicateur, des polymères amorphes compatibles avec un plastifiant, notamment des polymères linéaires amorphes qui contiennent, en plus, des molécules d'indicateur incorporées, encore un plastifiant supplémentaire.

2. Installation de mesure suivant la revendication 1, caractérisée par l'emploi, comme matériau porteur, de polymères hydrophiles du groupe comprenant les acétates de cellulose, acéto-butyrate de cellulose, nitrate de cellulose ou éthylcellulose, et un plastifiant choisi dans le groupe glycol, glycérine ou penta-vérythrite.

3. Installation de mesure suivant la revendication 1, caractérisé en ce que sont utilisés, comme matériau porteur, des polymères hydrophobes du groupe comprenant les chlorures de polyvinyle, polystyrène, acétate de poly-vinyle, polyvinylbutyral, acéto-chlorure de polyvinyle, polyéthylène, polypropylène, polyuréthane, polyester, caoutchouc naturel, caoutchouc isoprène ou caoutchouc butyle, et, comme plastifiant, des produits du groupe comprenant des esters à haut point d'ébullition tels que phosphate de triaryle, phtalate de dialcoyle, adipate de dialcoyle ou sébaçate de dialcoyle, des huiles minérales, diphényle ou polyphényle chlorés, huiles époxydées, plastifiants polymères, tels que polyester, polyisobutène ou caoutchouc nitruré, ou des plastifiants polymérisables, tels que esters nitrurés d'alcoyle, d'aryle.

4. Installation de mesure suivant l'une quelconque des revendications 1 à 3, caractérisé en ce qu'on utilise comme indicateur, des molécules aromatiques polycycliques, homo- ou hétérocycliques, par exemple des hydrocarbures aromatiques polycycliques ayant des temps d'extinction de fluorescence τ. supérieurs à 5 nano-secondes.

5. Installation de mesure suivant l'une quelconque des revendications 1 à 4, caractérisée en ce que, sur la face du polymère porteur qui est tournée vers l'échantillon, on applique une couche supplémentaire de polymère, faiblement translucide, par exemple une couche de polymère ayant la même composition que le matériau porteur, mais avec incorporation de particules d'oxyde de fer.

6. Installation de mesure suivant l'une quelconque des revendications 1 à 4, caractérisée en ce que l'on incorpore dans le polymère porteur contenant l'indicateur des particules de pigment supplémentaires, par exemple des particules d'oxyde de fer.

7. Installation de mesure suivant la revendication 6, caractérisée en ce que le côté du polymère porteur qui est tourné vers l'échantillon, est enrichi en particules pigmentaires au cours de l'opération de durcissement, sous l'effet de champs de force extérieures, par exemple un champ de gravitation, un champ électrique ou un champ magnétique.

8. Installation de mesure suivant l'une quelconque des revendications 1 à 4, caractérisée en ce que sur la face du polymère porteur qui est tournée vers l'échantillon, on fait prendre dans le polymérisat une mince grille et mailles constituée notamment de métal ou de matière plastique.

9. Installation de mesure suivant l'une quelconque des revendications 1 à 8, caractérisée en ce que la substance de l'indicateur se présente, en vue de sa fixation, sous une forme chimiquement modifiée étant par exemple alcoylée avec des chaînes d'hydrocarbure longues, ramifiées ou non ramifiées, de $C_3$ à $C_{20}$, ce qui fait que la mobilité de l'indicateur dans le maintien du polymère est limitée.

10. Installation de mesure suivant l'une quelconque des revendications 1 à 8, caractérisé en ce que la substance de l'indicateur, est liée sous la forme covalente au matériau porteur polymère pour être rendue immobile.